# EUROPÄISCHE PATENTSCHRIFT

(11) **EP 1 171 949 B1**
(45) Veröffentlichungstag und Bekanntmachung des Hinweises auf die Patenterteilung: **10.07.2013**
(21) Anmeldenummer: 01909754.2
(22) Anmeldetag: 15.02.2001
(51) Int. Cl.: H02P 8/10

(54) **VERFAHREN ZUR BESCHLEUNIGUNG DER VERSTELLBEWEGUNG IN EINEM POSITIONIERSYSTEM MIT SCHRITTMOTOREN**
METHOD FOR ACCELERATING A CONTROL MOVEMENT IN A POSITIONER SYSTEM WITH STEP MOTORS
PROCEDE D'ACCELERATION DU MOUVEMENT DE REGLAGE D'UN SYSTEME DE POSITIONNEMENT PAR DES MOTEURS PAS A PAS

(30) Priorität: 17.02.2000 DE 10007212
(43) Veröffentlichungstag der Anmeldung: 16.01.2002
(73) Patentinhaber: Carl Zeiss Microscopy GmbH, 07745 Jena (DE)
(72) Erfinder: KAUFHOLD, Tobias, 07749 Jena (DE); JORAM, Ralf Michael, 90475 Nürnberg (DE)
(74) Vertreter: Hampe, Holger
(86) Internationale Anmeldenummer: PCT/EP2001/001662
(87) Internationale Veröffentlichungsnummer: WO 2001/061836

(56) Entgegenhaltungen:
- DE-A- 3 138 554
- DE-A- 4 429 001
- DE-A- 19 822 256
- GB-A- 1 579 121

## Beschreibung

Die Erfindung bezieht sich auf ein Verfahren zur Beschleunigung der Verstellbewegung in einem Positioniersystem, bei dem mindestens ein Schrittmotor mit einer veränderbaren Ansteuerfrequenz f angesteuert wird, die Verstellgeschwindigkeit von der Ansteuerfrequenz f abhängig ist und mit jeweils einer Periode der Ansteuerfrequenz f ein Positionierschritt der Verstellbewegung ausgelöst wird, wobei die Gesamtzahl der aneinandergereihten Positionierschritte der Länge eines Verstellbereiches entspricht und jedem Positionierschritt eine bestimmte Position innerhalb des Verstellbereiches zugeordnet ist.

Es ist bekannt, die Schrittwinkel, die für einen Schrittmotor definiert vorgegeben werden, in Inkremente einer Längsbewegung zu wandeln und auf dieser Grundlage Positioniersysteme zu betreiben, mit denen Verschiebungen von Gerätebaugruppen entlang eines Verstellbereiches bzw. einer Bahn hochgenau vorgenommen werden. Mit entsprechender Beschaltung der Wicklungen bzw. der Phasensteuerung des Schrittmotors läßt sich eine sensible Ansteuerung und damit ein Fortschreiten der Drehbewegung in so kleinen Schrittwinkeln erzielen, daß auch für optische Feingeräte, wie beispielsweise Zoomeinrichtungen in Mikroskopen, die präzise Positionierung der Zoomgruppen erreicht wird, die zum Verändern der Vergrößerung bei Beibehaltung der Abbildungsschärfe erforderlich ist.

So sind beim derzeiten Stand der Entwicklung bei permanent erregten Schrittmotoren Schrittwinkel von 3,75°, bei Hybridschrittmotoren Schrittwinkel von 1,8° und bei Reluktanzschrittmotoren Schrittwinkel von 1° üblich. Zur Wandlung der Dreh- in eine Längsbewegung werden in der Regel Spindelsysteme genutzt.

Ein bei der Konfiguration von Positioniersystemen mit Schrittmotoren stets zu beachtendes Problem besteht darin, daß aufgrund der begrenzten Stromanstiegsgeschwindigkeit in den Windungen der Motorwicklung das zur Verfügung stehende Drehmoment mit zunehmender Schrittfrequenz abnimmt. Da ein Teil des Drehmoments zur Beschleunigung der externen Masse, beispielsweise einer zu verschiebenden Zoomgruppe, genutzt wird, wird der zum Starten und Stoppen verfügbare Ansteuerfrequenzbereich mit zunehmendem Lastträgheitsmoment kleiner.

Solange der Schrittmotor mit einer Ansteuerfrequenz im Start- und Stop-Frequenzbereich betrieben wird, kann er jederzeit ohne Schrittverluste angehalten werden. Im Beschleunigungsfrequenzbereich dagegen, der innerhalb der oberen Startgrenzfrequenz und der Betriebsgrenzfrequenz liegt, ist es nicht möglich, den Schrittmotor ohne Schrittverluste zu stoppen.

Um Ungenauigkeiten bei der Positionierung zu vermeiden und auch um bei einem gegebenen Lastmoment kurze Verstellzeiten zu erzielen, ist es also notwendig, die Ansteuerfrequenz über den Startfrequenzbereich und den Beschleunigungsfrequenzbereich hinweg bis zur Betriebsgrenzfrequenz sukzessive zu erhöhen, d.h. es ist Schritt für Schritt zu beschleunigen, bis die bei Ansteuerung mit der Betriebsgrenzfrequenz die maximal mögliche Geschwindigkeit erreicht ist. Umgekehrt ist bereits vor dem Erreichen der Zielposition einer zu verschiebenden Baugruppe die Ansteuerfrequenz bis in den Stop-Frequenzbereich hinunter zu verringern und dadurch der Schrittmotor abzubremsen.

Meist kommt es darauf an, die Verschiebung möglichst schnell vorzunehmen und die betreffende Baugruppe schnell in eine vorgegebene Position zu bringen. Um das zu erreichen, werden Beschleunigungs- und Bremsfunktionen in Form von Kurvenverläufen vorgegeben, die in der Fachwelt auch unter der Bezeichnung Beschleunigungs- bzw. Bremsrampen bekannt sind.

Dem Verlauf einer solchen Beschleunigungsrampe folgend werden die Schrittmotoren durch Erhöhung der Ansteuerfrequenz bis zu ihrer maximalen Drehzahl beschleunigt, wobei die von Schritt zu Schritt mögliche Anhebung der Ansteuerfrequenz stets den technischen Eigenschaften bzw. dem Leistungsvermögen des jeweiligen Schrittmotors und der angekoppelten Last abhängig ist.

Insofern werden linear verlaufende Beschleunigungsfunktionen für die Drehzahlbereiche vorgegeben, in denen die Schrittfrequenz-Drehmoment-Kennlinie eine angenähert lineare Funktion hat. In höheren Drehzahlbereichen werden der Beschleunigungsfunktion exponentielle Formen zugrunde geliegt, da diese sich sehr gut dem Verlauf der Schrittfrequenz-Drehmoment-Kennlinie anpassen lassen.

Zerlegt man nun einen Verstellbereich, der sich beispielsweise über eine gerade Bahn hinweg erstreckt, in einzelne, in ihrer Vielzahl den Schrittwinkeln proportionale Inkremente, die im folgenden als Positionierschritte bezeichnet werden sollen, so lassen sich innerhalb eines Verstellbereiches, in dem eine Baugruppe mit fest vorgegebenem Bewegungsablauf verschoben werden soll, Extrempositionen festlegen, wie Start-, Halte- und Wendepositionen, wobei sich bei letzteren die Bewegungsrichtung der Baugruppe umkehrt.

Nähert sich die Baugruppe während der Verschiebung einer Halte- oder Wendeposition, muß die Ansteuerfrequenz rechtzeitig in den Stop-Frequenzbereich abgesenkt werden.

Es kann also für jede beliebige Position innerhalb des Verstellbereiches in Abhängigkeit von deren Abstand zu einer der Extrempositionen angegeben werden, ob die Ansteuerfrequenz in Bewegungsrichtung nachfolgend erhöht, beibehalten oder verringert werden muß, um die im Hinblick auf Verstellgeschwindigkeit und Positioniergenauigkeit optimale Betriebsweise zu realisieren.

Bei den aus dem Stand der Technik bekannten Verfahren zur Ansteuerung von Schrittmotoren wird zu diesem Zweck während der Verstellbewegung stets die derzeit mögliche Anhalteposition mit der anzufahrenden Extremposition verglichen und der Bremsvorgang durch Verringerung der Ansteuerfrequenz eingeleitet, wenn sich die mögliche Anhalteposition und die Extremposition decken. Diese Verfahrensweise erfordert nachteiligerweise jedoch verhältnismäßig viel Speicher- und Rechenkapazität.

Eine anderes bekanntes Verfahren sieht dagegen vor, die Extempositionen abzuspeichern und während der Verstellbewegung für jeden Positionsschritt im voraus zu berechnen, ob die aktuelle Geschwindigkeit im zulässigen Bereich liegt. In Abhängigkeit davon wird dann entschieden, ob beschleunigt, die Geschwindigkeit gehalten oder gebremst wird. Aber auch hiermit lassen sich die Speicherkapazität und die notwendige Rechenzeit nicht wesentlich verringern.

Die vorgenannten Nachteile fallen besonders dann ins Gewicht, wenn es sich um Positioniersysteme handelt, die mehrere Schrittmotoren für Stellbewegungen verschiedener Baugruppen umfassen. So ist in WO 99/0436 eine "Anordnung zur direkten Steuerung der Bewegung eines Zoomsystems in einem Stereomikroskop" beschrieben, bei welcher die Positionierung der optischen Zoomgruppen mit getrennt angesteuerten Schrittmotoren vorgesehen ist.

Im Stand der Technik werden bei Ansteuerungen dieser Art die Extrempositionen aller Bewegungsabläufe abgespeichert und es wird, wie bereit vorstehend erwähnt, für die einzelnen Positionsschritte im voraus berechnet, ob die aktuelle Geschwindigkeit im zulässigen Bereich liegt, was aber mit den bereits genannten Nachteile verbunden ist.

Davon ausgehend liegt der Erfindung die Aufgabe zugrunde, ein Verfahren der eingangs beschriebenen Art derart weiterzubilden, daß unter Beibehaltung einer hohen Positioniergenauigkeit bei verringertem technischen Aufwand ein schnellstmöglicher Bewegungsablauf erzielt werden kann.

Erfindungsgemäß ist bei einem solchen Verfahren zur Beschleunigung der Verstellbewegungen in einem Positioniersystem vorgesehen, zunächst jedem Pösitionierschritt innerhalb eines Verstellbereiches eine zulässige Ansteuerfrequenz f_{zul} zuzuordnen. Die Zuordnungen von Ansteuerfrequenzen f_{zul} und Positionierschritten werden als Datensatz in einem Speicher abrufbar abgelegt. Während der Verstellbewegung wird für jeden Positionierschritt die aktuell anliegende Ansteuerfrequenz fᵢₛₜ mit der zulässigen Ansteuerfrequenz f_{zul} des in Bewegungsrichtung nachfolgenden Positionierschrittes verglichen, und in Abhängigkeit vom Ergebnis dieses Vergleichs wird die Ansteuerfrequenz f für den nachfolgenden Schritt erhöht, wenn der Vergleich fᵢₛₜ<f_{zul} ergibt, es wird die Ansteuerfrequenz f für den nachfolgenden Schritt beibehalten, wenn das Ergebnis des Vergleichs fᵢₛₜ=f_{zul} ergibt oder es wird die Ansteuerfrequenz f für den nachfolgenden Schritt abgesenkt, wenn das Ergebnis des Vergleichs fᵢₛₜ>f_{zul} ergibt.

Mit der Zuordnung von Positionierschritten und maximal zulässigen Ansteuerfrequenzen f_{zul} erhält man einen auf den gesamten Verstellbereich bezogenen Geschwindigkeitsvektor, der die zulässigen Geschwindigkeiten des Gesamtsystems für jedes Bahnelement bzw. jeden Positionierschritt enthält und so die Hüllkurve der erlaubten Geschwindigkeiten für den Verstellbereich darstellt.

Bei Anwendung des erfindungsgemäßen Verfahrens ist zur Bewertung der aktuellen Geschwindigkeit bzw. zur Beantwortung der Frage, ob die Geschwindigkeit noch weiter erhöht werden kann, nun lediglich zu prüfen, ob die zulässige Ansteuerfrequenz f_{zul} für den nachfolgenden Positionierschritt größer ist als die aktuelle Ansteuerfrequenz fᵢₛₜ. Ist dies der Fall, wird die Verstellbewegung durch Anhebung der Ansteuerfrequenz f beschleunigt.

Dies trifft im übertragenen Sinne auch zu für die Fälle, in denen die dem nachfolgenden Positionierschritt zugeordnete zulässige Ansteuerfrequenz f_{zul} ebenso groß ist wie die aktuelle Ansteuerfrequenz fᵢₛₜ und auch für die Fälle, in denen die dem nachfolgenden Positionierschritt zugeordnete zulässige Ansteuerfrequenz f_{zul} kleiner ist als die aktuelle Ansteuerfrequenz fist.

Im ersteren Fall wird entweder mit unveränderter Ansteuerfrequenz f weitergefahren, im letzteren Falle die Ansteuerfrequenz f abgesenkt. Da wie bereits dargelegt die Ansteuerfrequenz f der Geschwindigkeit der Verstellbewegung proportional ist, wird so die Geschwindigkeit der Verstellbewegung beibehalten oder verringert.

Damit ergibt sich der Vorteil, daß Rechenkapazität nur noch für den Vergleich der aktuellen Ansteuerfrequenz fᵢₛₜ mit der für den nachfolgenden Positionierschritt zulässigen Ansteuerfrequenz f_{zul} erforderlich ist. Der Rechenaufwand im Vergleich zum Stand der Technik ist somit wesentlich minimiert. Der Speicherbedarf ist reduziert und es wird auf diese Weise erreicht, daß alle Verstellbewegungen mit der dem jeweiligen Positioniersystem angepaßten maximal möglichen Geschwindigkeit vorgenommen werden.

Die Anpassung der höchstmöglichen Geschwindigkeiten über den gesamten Verstellbereich hinweg ist von den technischen Eigenschaften der jeweils verwendeten Schrittmotoren und beispielsweise von der zu bewegenden Masse abhängig. Diese Kriterien werden bei der Festlegung der zulässigen Geschwindigkeiten, bezogen auf jeden Positionierschritt, berücksichtigt.

Dabei ist es möglich, das Positioniersystem sowohl im Automatikbetrieb als auch mit Handsteuerung zu betreiben, wobei im Handbetrieb sichergestellt ist, daß eine willkürliche Erhöhung der Verstellgeschwindigkeit nicht vorgenommen werden kann, da die Ansteuerfrequenzen f_{zul} für jedes Bahnelement bzw. für jeden Positionierschritt in der Ansteuerschaltung gespeichert sind und eine Überhöhung blockiert wird.

In einer bevorzugten Ausgestaltung der Erfindung ist vorgesehen, daß innerhalb des Verstellbereiches bzw. innerhalb einer Bahn Extrempositionen, bevorzugt Start-, Wende- und Haltepositionen, bestimmt werden und die zulässige Ansteuerfrequenz f_{zul} für jeden Positionierschritt in Abhängigkeit von dessen Abstand zu einer Extremposition festgelegt wird.

Auf diese Weise ist es möglich, während der Ansteuerung Beschleunigungs- bzw. Bremskurvenverläufe, die sogenannten Rampen, zu berücksichtigen. Im Bereich einer Beschleunigungskurve wird die aktuelle Ansteuerfrequenz fᵢₛₜ stets kleiner sein als die zulässigen Ansteuerfrequenzen f_{zul} für den in Bewegungsrichtung nachfolgenden Positionierschritt. Im Bereich einer Bremskurve dagegen ist die aktuelle AnSteuerfrequenz fᵢₛₜ stets größer als die zulässigen Ansteuerfrequenzen f_{zul} für den in Bewegungsrichtung nachfolgenden Positionierschritt.

Außerdem kann eine maximal zulässige Ansteuerfrequenz fₘₐₓ vorgegeben werden, die beispielsweise der Grenzbetriebsfrequenz des entsprechenden Schrittmotors entspricht, so daß eine Übersteuerung des Motors ausgeschlossen ist. Die maximal zulässige Ansteuerfrequenz fₘₐₓ ist vorteilhaft in den Abschnitten einer Bahn, in denen die Verschiebung bzw. Zustellung mit maximaler Geschwindigkeit erfolgen kann, mit der zulässigen Ansteuerfrequenz f_{zul} identisch.

Eine weitere bevorzugte Ausgestaltung der Erfindung sieht vor, daß innerhalb des gesamten Verstellbereiches unterschiedliche maximal zulässige Ansteuerfrequenz fₘₐₓ und damit unterschiedliche höchstmögliche Verstellgeschwindigkeiten vorgegeben werden. So ist es zum Beispiel möglich, einem ersten Abschnitt eines Verstellbereiches eine maximal zulässige Ansteuerfrequenz f_{grob} für eine Grobverstellungen mit höherer Geschwindigkeit und einem anderen Abschnitt eine maximal zulässige Ansteuerfrequenz f_{fein} für eine Feinverstellungen mit geringerer Geschwindigkeit vorzugeben.

Die Erfindung soll nachfolgend anhand eines Ausführungsbeispieles näher erläutert werden. In den zugehörigen Zeichnungen zeigen
- Fig. 1: die prinzipielle Darstellung des Beschleunigungsablaufes in einem Verstellbereich mit je einer Startposition, einer Halteposition und einer Wendeposition,
- Fig. 2: die prinzipielle Darstellung des Beschleunigungsablaufes in einem Verstellbereich mit zwei Grenzansteuerfrequenzen f_{grob} und f_{fein} für eine Grob- und eine Feinpositioniergeschwindigkeit.

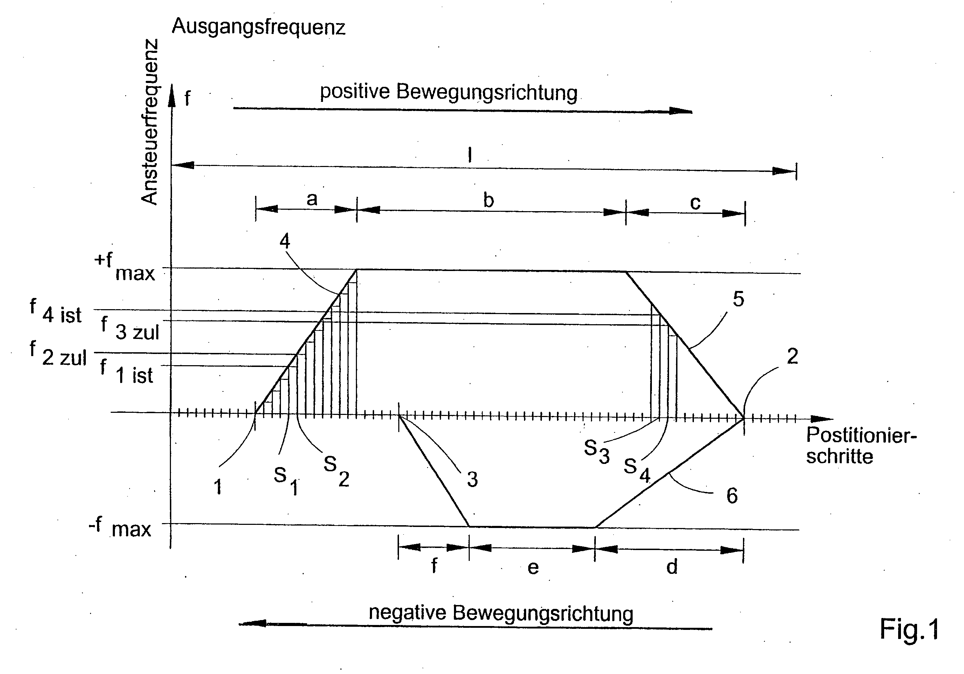

Im Diagramm nach Fig.1 sind für einen Verstellbereich 1 auf der Abszisse die Positionierschritte abgetragen und auf der Ordinate die Ansteuerfrequenzen f, die der Verstellgeschwindigkeit über den Verstellbereich 1 hinweg proportional sind. Für eine positive Bewegungsrichtung sei +fₘₐₓ als Grenzwert gespeichert, für die entgegengesetzte negative Bewegungsrichtung sei -fₘₐₓ als Grenzwert vorgesehen.

Werden die Ansteuerfrequenzen +fₘₐₓ bzw. -fₘₐₓ von der Ansteuerschaltung an den Schrittmotor vorgegeben, so erfolgt die Verstellbewegung mit maximaler Geschwindigkeit in der jeweils entsprechenden Richtung.

Der Vielzahl der (nicht maßstäblich) eingezeichneten Positionierschritten sind in Fig.1 drei Extrempositionen zugeordnet, nämlich eine Startposition 1, eine Wendeposition 2 und eine Halteposition 3.

Erfindungsgemäß ist jedem der Positionierschritte des Verstellbereiches eine zulässige Ansteuerfrequenz f_{zul} zugeordnet. In den Abschnitten a und d weist der Verstellbereich 1 Beschleunigungskurven 4 und 6 auf; dort sind die zulässigen Ansteuerfrequenzen f_{zul} für benachbarte Positionierschritte verschieden. Dasselbe gilt für die Abschnitte c und f mit Bremskurven 5 und 7; auch hier sind für benachbarte Positionierschritte die zulässigen Ansteuerfrequenzen f_{zul} verschieden. In den Abschnitten b und e, in denen die Verstellgeschwindigkeit gleichförmig verlaufen soll, sind die zulässigen Ansteuerfrequenzen f_{zul} für benachbarte Positionierschritte gleich.

In Fig.1 ist zu erkennen, daß die zulässigen Ansteuerfrequenzen f_{zul} aller Positionierschritte von der Geschwindigkeitskurve "eingehüllt" werden, die für die positive Bewegungsrichtung bei der Startposition 1 beginnt und sich über die Beschleunigungskurve 4, den Abschnitt b und die Bremskurve 5 hinweg bis zur Wendeposition 2 erstreckt. Für die negative Bewegungsrichtung beginnt diese Hüllkurve bei der Wendeposition 3 und erstreckt sich über die Beschleunigungskurve 6, den Abschnitt e mit gleichförmiger Verstellgeschwindigkeit und die Bremskurve 7 hinweg bis zur Halteposition 3.

Diese Zuordnung von Positionierschritten und zulässigen Verstellgeschwindigkeiten wird erfindungsgemäß in einem Datensatz gespeichert und in der Ansteuerschaltung als Hüllkurve für die Geschwindigkeitssteuerung abgelegt.

Wird nun die beispielhaft angegebene Verstellbewegung per Startsignal ausgelöst, so beginnt die Verschiebung bei der Startposition 1 mit einer gleichmäßig beschleunigten Bewegung entsprechend der Beschleunigungskurve 4. Dabei wird erfindungsgemäß bei jedem Positionierschritt die anliegende aktuelle Ansteuerfrequenz fᵢₛₜ mit der Ansteuerfrequenz f_{zul} verglichen, die dem nächstfolgenden Positionierschritt zugeordnet ist.

Dieser Vergleich wird, solange die Positionierschritte im Abschnitt a durchlaufen werden, stets fᵢₛₜ < f_{zul} ergeben mit der Konsequenz, daß die aktuelle Ansteuerfrequenz fᵢₛₜ auf die für den nächsten Positionierschritt zulässige Ansteuerfrequenz f_{zul} erhöht wird.

Das soll beispielhaft verdeutlicht werden anhand des Vergleiches des Positionierschrittes S₁, dem die Ansteuerfrequenz f_{1zul} zugeordnet ist, mit dem Positionierschritt S₂, dem die Ansteuerfrequenz f_{2zul} zugeordnet ist. Vor Ausführung des Positionierschrittes S₁ ist von der Ansteuerschaltung die Ansteuerfrequenz auf f_{1zul} angehoben worden, so daß aktuell gilt f_{1zul}=f₁ᵢₛₜ. Während des Positionierschrittes S₁ wird die Ansteuerfrequenz f₁ᵢₛₜ verglichen mit der dem Positionierschritt S₂ zugeordneten Ansteuerfrequenz f_{2zul}. Der Vergleich ergibt f₁ᵢₛₜ < f_{2zul} mit der Folge, daß die Ansteuerfrequenz f₁ᵢₛₜ wiederum erhöht wird auf f_{2zul}, was die Beschleunigung der Verstellbewegung zur Folge hat. Während des beschleunigt ablaufenden Positionierschrittes S₂ wird die Ansteuerfrequenz f_{2zul} zu f₂ᵢₛₜ, und f₂ᵢₛₜ wird dem Vergleich mit f_{zul} des nachfolgenden Positionierschrittes zugrunde gelegt.

Sind die Positionierschritte innerhalb der Beschleunigurigskurve 4 durchlaufen wird der Abschnitt b erreicht, wo für den Vergleich zweier aufeinander folgender Positionierschritte stets gilt fᵢₛₜ=f_{zul}=fₘₐₓ, so daß für den nächstfolgenden Positionierschritt die gleiche Ansteuerfrequenz f vorgegeben wird wie für den aktuellen Positionierschritt, was die Beibehaltung der Verstellgeschwindigkeit zur Folge hat.

Für die aufeinander folgenden Positionierschritte S₃ und S₄ innerhalb des Abschnittes c, der die Bremskurve 5 umfaßt, gilt (wie im übertragenen Sinne für alle anderen Positionierschritte in diesem Abschnitt c auch) f₃ᵢₛₜ < f_{4zul}, woraus folgt, daß die Ansteuerfrequenz f abgesenkt und damit die Verstellgeschwindigkeit verringert wird.

Nach Durchlaufen der Wendeposition 2 wird nach dem gleichen Prinzip innerhalb des Abschnittes d, also der Beschleunigungskurve 6, die Ansteuerfrequenz f wieder von Positionierschritt zu Positionierschritt erhöht, bis -fₘₐₓ erreicht ist.

Auf diese Weise wird erfindungsgemäß erreicht, daß mit geringem Aufwand, der lediglich stets nur im Vergleich der aktuellen mit der zulässigen Ansteuerfrequenz f besteht, die Verstellbewegung immer mit der systemabhängig höchstmoglichen Geschwindigkeit erfolgt.

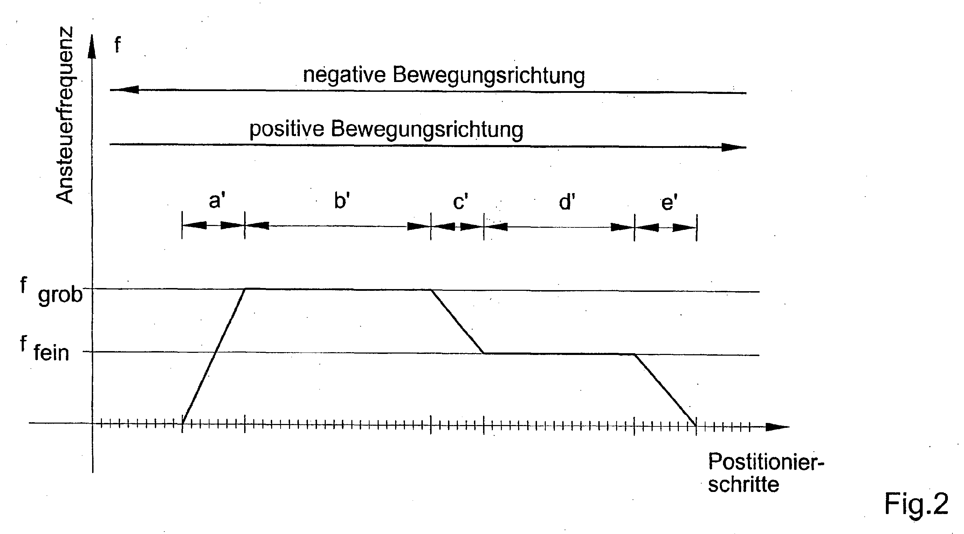

In dem Diagramm nach Fig.2 sind beispielhaft einzelnen Abschnitten a',b',c',d',e' unterschiedliche maximale Ansteuerfrequenzen f_{grob} und f_{fein} zugeordnet, wodurch in den Abschnitten mit der höheren maximal zulässigen Ansteuerfrequenz f_{grob} eine höhere Verstellgeschwindigkeit, etwa für einen Grobpositionierung, erreicht wird, während in den Abschnitten mit der geringeren maximal zulässigen Ansteuerfrequenz f_{fein} nur eine geringere Verstellgeschwindigkeit, etwa für eine Feinzustellung, erreicht werden kann.

Der Übersichtlichkeit halber ist in Fig.2 beispielhaft nur diepositive Bewegungsrichtung dargestellt. Auch hier wird erfindungsgemäß für jeden Positionierschritt eine zulässige Ansteuerfrequenz f_{zul} gespeichert. Während der Verstellbewegung wird in derselben Weise wie oben anhand Fig.1 dargestellt für jeden Positionierschritt die Entscheidung getroffen, ob die aktuelle Ansteuerfrequenz fᵢₛₜ jeweils kleiner, gleich oder größer ist als die zulässige Ansteuerfrequenz f_{zul} des in Bewegungsrichtung nachfolgenden Positionierschrittes und in Abhängigkeit davon die Ansteuerfrequenz f angehoben, beibehalten oder abgesenkt, wobei die maximal zulässigen Ansteuerfrequenzen f_{grob} und f_{fein} nicht überschritten werden.

Damit wird auch hier mit geringen technischen Mitteln erreicht, daß die Verstellung in jedem der Abschnitte a',b',c',d',e' stets mit optimaler Geschwindigkeit erfolgt.

Zusammengefaßt bestehen die Vorteile der erfindungsgemäßen Lösung außerdem auch noch darin, daß die erforderliche Speicherkapazität und Rechenzeit zur Überwachung der Beschleunigung minimal ist, die Start-, Halte- und Wendepositionen jederzeit ohne großen Aufwand geändert werden können und die Anzahl der Schrittmotoren bzw. die Anzahl der Verschiebebahnen, von denen jeweils eine einem der Schrittmotoren zugeordnet ist, beliebig erweitert werden kann.

Das erfindungsgemäße Verfahren ist außerdem weitestgehend unabhängig von der Hardware der Gerätetechnik und insofern für die verschiedensten Anwendungsfälle geeignet.

**Bezugszeichenliste**

| | |
|---|---|
| 1 | Startposition |
| 2 | Wendeposition |
| 3 | Halteposition |
| 4, 6 | Beschleunigungskurve |
| 5, 7 | Bremskurve |
| | |
| | |
| 1 | Verstellbereich |
| f | Ansteuerfrequenz |

## Patentansprüche

1. Verfahren zur Beschleunigung der Verstellbewegung in einem Positioniersystem, bei dem mindestens ein Schrittmotor mit einer veränderbaren Ansteuerfrequenz f betrieben wird, die Verstellgeschwindigkeit von der Ansteuerfrequenz f abhängig ist und mit jeder Periode der Ansteuerfrequenz f ein Positionierschritt der Verstellbewegung ausgelöst wird, wobei die Gesamtzahl der aneinandergereihten Positionierschritte der Länge eines Verstellbereiches 1 entspricht und jedem Positionierschritt eine bestimmte Position innerhalb des Verstellbereiches 1 zugeordnet ist, **dadurch gekennzeichnet, daß**
- zunächst jedem der Positionierschritte eine zulässige Ansteuerfrequenz f_{zul} zugeordnet wird,
- die Zuordnung der Ansteuerfrequenzen f_{zul} zu bestimmten Positionierschritten als Datensatz in einem Speicher abrufbar abgelegt wird,
- während des Betriebes des Positioniersystems für jeden Positionierschritt die aktuell anliegende Ansteuerfrequenz fist mit der dem nachfolgenden Positionierschritt zugeordneten maximal zulässigen Ansteuerfrequenz f_{zul} verglichen wird und
- die Ansteuerfrequenz f für den nachfolgenden Positionierschritt erhöht wird,' wenn der Vergleich fᵢₛₜ<f_{zul} ergibt, die Ansteuerfrequenz f für den nachfolgenden Positionierschritt beibehalten wird, wenn der Vergleich fᵢₛₜ=f_{zul} ergibt oder die Ansteuerfrequenz f für den nachfolgenden Schritt abgesenkt wird, wenn das Ergebnis des Vergleichs fᵢₛₜ>f_{zul} ergibt.

2. Verfahren nach Anspruch 1, **dadurch gekennzeichnet, daß**
- innerhalb eines Verstellbereiches 1 Extrempositionen, bevorzugt Startpositionen (1), Haltepositionen (2) und/oder Wendepositionen (3) festgelegt werden und
- die zulässige Ansteuerfrequenz f_{zul} für jeden Positionierschritt innerhalb des Verstellbereiches 1 in Abhängigkeit von dessen Abstand zu Extrempositionen festgelegt wird.

3. Verfahren nach Anspruch 1 oder 2, **dadurch gekennzeichnet, daß** die zulässigen Ansteuerfrequenzen f_{zul} in den Abschnitten des Verstellbereiches 1, in denen eine gleichförmige Verstellbewegung vorgesehen ist, übereinstimmend mit der technisch maximal möglichen Ansteuerfrequenzen fₘₐₓ des Schrittmotors festgelegt werden.

4. Verfahren nach einem der vorgenannten Ansprüche, **dadurch gekennzeichnet, daß** in das Positioniersystem mehrere Schrittmotoren einbezogen werden, jedem dieser Schrittmotoren ein separater Verstellbereich 1 zugeordnet und jeder Schrittmotor mit einer separaten Ansteuerschaltung verknüpft wird.

5. Verfahren nach einem der vorgenannten Ansprüche, **dadurch gekennzeichnet, daß** die Schrittmotoren jeweils über Spindelsysteme, die der Wandlung der Dreh- in eine Längsbewegung dienen, mit den positionsveränderlichen optischen Baugruppen eines Zoomobjektivs verbunden sind.

## Claims

1. Method for accelerating the adjusting movement in a positioning system, in the case of which at least one stepper motor is operated with a variable drive frequency f, the adjusting speed being a function of the drive frequency f, and a positioning step of the adjusting movement being initiated with each period of the drive frequency f, the total number of the juxtaposed positioning steps corresponding to the length of an adjustment range 1, and each positioning step being assigned a specific position within the adjustment range 1, **characterized in that**
- first of all each of the positioning steps is assigned a permissible drive frequency f_{zul},
- the assignment of the drive frequencies f_{zul} relating to specific positioning steps is retrievably stored as a data record in a memory,
- during the operation of the positioning system, for each positioning step the currently existing drive frequency fᵢₛₜ is compared with the maximum permissible drive frequency f_{zul} assigned to the following positioning step, and
- the drive frequency f for the following positioning step is increased when the comparison yields fᵢₛₜ < f_{zul}, the drive frequency f for the following positioning step is retained when the comparison yields fᵢₛₜ = f_{zul}, or the drive frequency f for the following step is lowered when the result of the comparison yields fᵢₛₜ > f_{zul}.

2. Method according to Claim 1, **characterized in that**
- extreme positions, preferably starting positions (1), holding positions (2) and/or reversing positions (3), and
- the permissible drive frequency f_{zul} for each positioning step is fixed within the adjusting range 1 as a function of the distance thereof from the extreme positions.

3. Method according to Claim 1 or 2, **characterized in that** the permissible drive frequencies f_{zul} in the sections of the adjusting range 1 in which a uniform adjusting movement is provided are fixed in accordance with the technically maximum possible drive frequencies fₘₐₓ of the stepper motor.

4. Method according to one of the preceding claims, **characterized in that** a plurality of stepper motors are included in the positioning system, each of these stepper motors is assigned a separate adjusting range 1, and each stepper motor is connected to a separate drive circuit.

5. Method according to one of the preceding claims, **characterized in that** the stepper motors are respectively connected to the positionally variable optical modules of a zoom objective via spindle systems which serve to convert the rotary movement into a longitudinal movement.

## Revendications

1. Procédé d'accélération du déplacement d'ajustement dans un système de positionnement, dans lequel
au moins un moteur pas-à-pas est conduit à une fréquence de commande f variable,
la vitesse d'ajustement dépend de la fréquence de commande f et une étape de positionnement du déplacement d'ajustement est déclenchée lors de chaque période de la fréquence de commande f,
le nombre total des étapes de positionnement successives correspond à la longueur d'une plage d'ajustement 1 et
une position définie dans la plage d'ajustement 1 est associée à chaque étape de positionnement, **caractérisé en ce que**
une fréquence admissible de commande f_{zul} est d'abord associée à chacune des étapes de positionnement,
**en ce que** l'association des fréquences de commande f_{zul} à des étapes de positionnement définies est conservée comme jeu de données dans une mémoire qui peut être interrogée,
**en ce que** lorsque le système de positionnement fonctionne, la fréquence de commande fᵢₛₜ effectivement appliquée pour chaque étape de positionnement est comparée à la fréquence maximale admissible f_{zul} associée à l'étape de positionnement suivante et
**en ce que** la fréquence de commande f est augmentée pour l'étape de positionnement suivante si la comparaison indique que fᵢₛₜ < f_{zul}, la fréquence de commande f pour l'étape de positionnement est maintenue si la comparaison indique que fᵢₛₜ = f_{zul} ou la fréquence de commande f pour l'étape suivante est abaissée si le résultat de la comparaison indique que fᵢₛₜ > f_{zul}.

2. Procédé selon la revendication 1, **caractérisé en ce que** des positions extrêmes et de préférence des positions initiales (1), des positions de maintien (2) et/ou des positions d'inflexion (3) sont définies à l'intérieur d'une plage d'ajustement 1 et **en ce que** la fréquence admissible de commande f_{zul} est définie pour chaque étape de positionnement à l'intérieur de la plage d'ajustement 1 en fonction de sa distance par rapport aux positions extrêmes.

3. Procédé selon les revendications 1 ou 2, **caractérisé en ce que** dans les sections de la plage d'ajustement 1 dans lesquelles un déplacement d'ajustement de même forme est prévu, les fréquences admissibles de commande f_{zul} sont définies en accord avec les fréquences de commande maximales possibles techniquement fₘₐₓ du moteur pas-à-pas.

4. Procédé selon l'une des revendications précédentes, **caractérisé en ce que** plusieurs moteurs pas-à-pas interviennent dans le système de positionnement, **en ce qu'**une plage séparée d'ajustement 1 est associée à chacun de ces moteurs pas-à-pas et **en ce que** chaque moteur pas-à-pas est raccordé à un circuit de commande séparé.

5. Procédé selon l'une des revendications précédentes, **caractérisé en ce que** les moteurs pas-à-pas sont reliés au module optique à position variable d'un objectif zoom par des systèmes de broche filetée qui servent à convertir un déplacement de rotation en un déplacement de translation longitudinale.
